# EUROPEAN PATENT SPECIFICATION

(11) **EP 4 494 944 B1**
(45) Date of publication and mention of the grant of the patent: **02.12.2026**
(21) Application number: 24184330.9
(22) Date of filing: 25.06.2024
(51) Int. Cl.: B60Q 3/18, B60Q 3/72, B60Q 3/80, B60Q 3/74

(54) **AUTOMATED SIGHT ADAPTATION SYSTEM AND METHOD**
SYSTEM UND VERFAHREN ZUR AUTOMATISCHEN SICHTANPASSUNG
SYSTÈME ET PROCÉDÉ D'ADAPTATION AUTOMATISÉE DE LA VUE

(30) Priority: 18.07.2023 US 202318354232
(43) Date of publication of application: 22.01.2025
(73) Proprietor: Honeywell International Inc., Charlotte, NC 28202 (US)
(72) Inventor: BILEK, Jan, Charlotte 28202 (US); SUDDRETH, John G., Charlotte 28202 (US)
(74) Representative: Ingrassia, Fisher & Lorenz UK Ltd.

(56) References cited:
- US-A1- 2019 033 860
- US-A1- 2019 232 866
- US-A1- 2020 172 009
- US-A1- 2020 398 747
- US-A1- 2022 258 665
- US-A1- 2023 219 495

## Description

### TECHNICAL FIELD

The present invention relates to sight adaptation systems and methods and, more particularly, to a system and method for automating sight adaption for persons within a vehicle.

### BACKGROUND

In certain contents, the occupants of a vehicle, including the driver and/or passengers, may be expected, upon reaching an assigned destination, to immediately exit the vehicle and engage in the environment outside of the vehicle. The ability to immediately engage can be impacted by the brightness difference between the vehicle interior and outside environment. In particular, the brightness difference may adversely impact the sight adaptation time of the occupants exiting the vehicle, which can lead to decreased performance for the duration of sight adaptation time. This issue may occur both in the case of moving from a relatively dark environment to relatively bright environment, where receptor overload can cause temporary white-out, and in the case of moving from a relatively bright environment to a relatively dark environment, where it may take several minutes for a person's eyes to sufficiently adapt.

Hence, there is a need for an automated sight adaptation system and method that automatically adjusts the brightness level within a vehicle to at least mitigate the potential performance decrease associated with the sight adaptation time.

Document US2022/258665A1 discloses such a sight adaptation system and method.

The present invention aims at improving such a system and method.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In one example that does not correspond to the invention, a sight adaptation system for a vehicle includes a mission data source, an exterior luminance sensor, an interior brightness level data source, and a processing system. The mission data source is configured to supply destination brightness data that is indicative of a brightness level at a predetermined mission destination location. The exterior luminance sensor is configured to sense current exterior brightness level outside of the vehicle and to supply exterior brightness data indicative of the current exterior brightness level. The interior brightness level data source is configured to supply interior brightness data indicative of current interior brightness level within the vehicle. The processing system is coupled to receive at least the destination brightness data, the exterior brightness data, and the interior brightness data. The processing system is configured to process at least the destination data, the exterior brightness data, and the interior brightness data to: compute an estimated time of arrival (ETA) for the vehicle to arrive at the predetermined mission destination location, compare the computed ETA to a maximum sight adaptation time, and based on the comparison of the computed ETA and the maximum sight adaptation time, selectively implement a first brightness level adjustment process for adjusting the interior brightness level within the vehicle or a second brightness level adjustment process for adjusting the interior brightness level within the vehicle.

In another example that does not correspond to the invention, a method for adjusting brightness level within a vehicle includes supplying, to a processing system, destination brightness data, exterior brightness data, and interior brightness data. At least the destination data, the exterior brightness data, and the interior brightness data are processed in the processing system to: compute an estimated time of arrival (ETA) for the vehicle to arrive at a predetermined mission destination location, compare the computed ETA to a maximum sight adaptation time, and based on the comparison of the computed ETA and the maximum sight adaptation time, selectively implement a first brightness level adjustment process for adjusting the interior brightness level within the vehicle or a second brightness level adjustment process for adjusting the interior brightness level within the vehicle. The destination brightness data is indicative of a brightness level at the predetermined mission destination location. The exterior brightness data is indicative of current exterior brightness level. The interior brightness data is indicative of current interior brightness level within the vehicle.

In yet another example that does not correspond to the invention, a sight adaptation system for a vehicle includes a mission data source, an interior brightness level data source, and a processing system. The mission data source is configured to supply destination brightness data that is indicative of a brightness level at a predetermined mission destination location. The interior brightness level data source is configured to supply interior brightness data indicative of current interior brightness level within the vehicle. The processing system is coupled to receive at least the destination brightness data and the interior brightness data. The processing system is configured to process at least the destination data and the interior brightness data to: compute an estimated time of arrival (ETA) for the vehicle to arrive at the predetermined mission destination location, compare the computed ETA to a maximum sight adaptation time, and based on the comparison of the computed ETA and the maximum sight adaptation time, selectively implement a first brightness level adjustment process for adjusting the interior brightness level within the vehicle or a second brightness level adjustment process for adjusting the interior brightness level within the vehicle. The first brightness level adjustment process includes a first sight adaptation time, which corresponds to a first time to adjust the brightness level within the vehicle to at least substantially match the exterior brightness level when the person exits vehicle at the predetermined mission destination location. The second brightness level adjustment process includes a second sight adaptation time, which corresponds to a second time to adjust the brightness level within the vehicle to at least approach the exterior brightness level when the person exits vehicle at the predetermined mission destination location. The first sight adaptation time is greater than the second sight adaptation time.

Furthermore, other desirable features and characteristics of the automated sight adaptation systems and methods will become apparent from the subsequent detailed description and the appended claims, taken in conjunction with the accompanying drawings and the preceding background.

### BRIEF DESCRIPTION OF DRAWINGS

The present invention will hereinafter be described in conjunction with the following drawing figures, wherein like numerals denote like elements, and wherein:
FIG. 1 depicts a functional block diagram of one embodiment of an automated sight adaptation system; and
FIG. 2 depicts a process flowchart of one example process, implemented in the system of FIG. 1, for adjusting brightness level within a vehicle.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

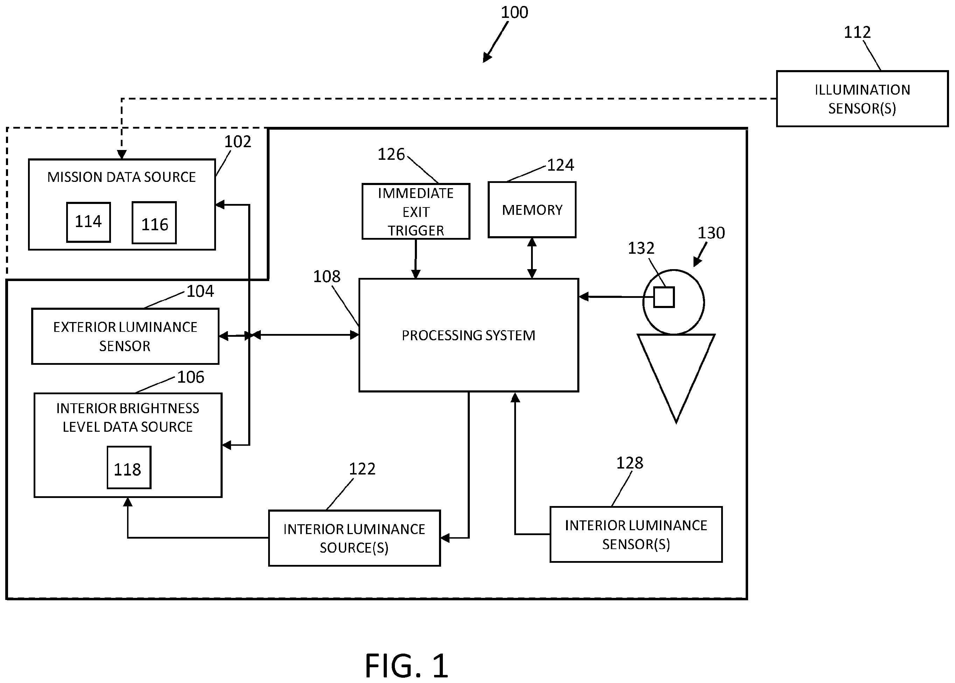

Referring to FIG. 1, a functional block diagram of one embodiment of an automated sight adaptation system 100 is depicted and includes a mission data source 102, an exterior luminance sensor 104, an interior brightness level data source 106, and a processing system 108. As FIG. 1 also depicts, at least a portion of the system 100 is disposed within a vehicle 110, which may be any one of numerous types of terrestrial vehicles, waterborne vehicles, or airborne vehicles. For example, as depicted using dotted lines in FIG. 1, some or all of the mission data source 102 may be disposed remote from the vehicle 110. It is noted that regardless of the particular type of vehicle 110, the vehicle 110 will have, when deployed, a location to which it is destined to travel for a mission. This location is referred to herein as a predetermined mission destination location.

The mission data source 102 is configured to supply destination brightness data that is indicative of the brightness level at the predetermined mission destination location. It will be appreciated that the mission data source 102 may be variously configured and implemented. For example, in some embodiments, the mission data source 102 may include one or more remote illumination sensors 112 disposed at the predetermined mission destination location. The remote illumination sensors 112, which may be implemented using any one of numerous types of illumination sensors, are configured to sense the brightness level at the predetermined mission destination location to thereby generate the destination brightness data. The remote illumination sensors 112 are additionally configured to transmit the destination brightness data, in real-time, to the processing system 108.

In other embodiments, the mission data source 102 may be implemented using one or more processors 114 that are configured to generate the destination brightness data from other types of input data. For example, the mission data source 102 may be configured, via the one or more processors 114, to receive and process data indicative of the estimated time of arrival for the vehicle 110 to arrive at the predetermined mission destination location to generate the destination brightness data. In these embodiments, the mission data source 102 may be further configured to receive various other additional data for the predetermined mission destination location and to generate the destination brightness data based additionally on the additional data. Some examples of the additional data include, without limitation, time, date, solar and lunar cycles, forecast weather, air particulate levels (dust or smog), whether the destination location is indoors or outdoors. The time, date, solar and lunar cycles may provide a baseline for the estimated brightness level at the destination location, and the additional data may be used, for example, to more accurately estimate the brightness level at the destination location. The additional data may, in some embodiments, further include primary direction data (i.e., whether the person is moving into or out of the sun), local terrain data, and/or foliage concentration data. For example, the destination location could be in a valley or heavily wooded area, shielded from the sun, resulting in a darker than expected brightness level.

In still other embodiments, the mission data source 102 may simply be, for example, a user interface 116 that is in operable communication with the processing system 108. In these embodiments, the destination brightness data may be input manually, via the user interface 116.

The exterior luminance sensor 104 is configured to sense the current exterior brightness level outside of the vehicle 110 and to supply exterior brightness data indicative of the current exterior brightness level. Preferably, the exterior luminance sensor 104 is mounted on the vehicle 110 and is disposed to readily sense the current exterior brightness level outside of the vehicle 110. It will be appreciated that the exterior luminance sensor 104 may be implemented using any one of numerous known luminance sensors. It will additionally be appreciated that in some embodiments the system 100 may be implemented without the exterior luminance sensor 104.

The interior brightness level data source 106 is configured to supply interior brightness data indicative of current interior brightness level within the vehicle 110. It will be appreciated that the interior brightness level data source 106 may also be variously configured and implemented. For example, in some embodiments, the interior brightness level data source 106 is implemented using an interior luminance sensor that is configured to sense the current interior brightness level within the vehicle 110.

In other embodiments, the interior brightness level data source 106 may be implemented using one or more processors 118 that are configured to generate the interior brightness data from other types of input data. For example, the interior brightness level data source 106 may be configured, via the one or more processors 118, to receive and process data indicative of the intensity of the interior lights 122 within the vehicle 110 to thereby generate the interior brightness level data.

No matter how the mission data source 102, the exterior luminance sensor 104, and the interior brightness level data source 106 are configured, each is in operable communication with the processing system 108. The processing system 108 may include one or more processors and computer-readable storage devices or media encoded with programming instructions for configuring the processing system 108. The one or more processors may be any custom-made or commercially available processor, a central processing unit (CPU), a graphics processing unit (GPU), an application specific integrated circuit (ASIC), a field programmable gate array (FPGA), an auxiliary processor among several processors associated with the controller, a semiconductor-based microprocessor (in the form of a microchip or chip set), any combination thereof, or generally any device for executing instructions.

The computer readable storage devices or media may include volatile and nonvolatile storage in read-only memory (ROM), random-access memory (RAM), and keep-alive memory (KAM), for example. KAM is a persistent or non-volatile memory that may be used to store various operating variables while the processor is powered down. The computer-readable storage device or media may be implemented using any of a number of known memory devices such as PROMs (programmable read-only memory), EPROMs (electrically PROM), EEPROMs (electrically erasable PROM), flash memory, or any other electric, magnetic, optical, or combination memory devices capable of storing data, some of which represent executable programming instructions, used by the one or more processors.

The processing system 108 is coupled to receive at least the destination brightness data, the exterior brightness data, and the interior brightness data. The processing system 108 is configured to process at least the minimal set of destination data, the exterior brightness data (when provided), and the interior brightness data to selectively implement either a first brightness level adjustment process or a second brightness level adjustment process. More specifically, the processing system 108 is configured to compute the estimated time of arrival (ETA) for the vehicle 110 to arrive at the predetermined mission destination location and compare the computed ETA to a maximum sight adaptation time.

Before proceeding further, it is noted that the maximum sight adaptation time is an amount of time that it takes, on average, for a person's eyes to adjust when transitioning from one brightness level to another brightness level, whether it be from a high brightness level to a low brightness level or from a low brightness level to a high brightness level. For example, the maximum sight adaptation time when transitioning from a low brightness level (e.g., relatively dark) to a high brightness level (e.g., daylight) is about 5 minutes, whereas the maximum sight adaptation time when transitioning from a high brightness level to a low brightness level is at least about 10 minutes (and even up to 45 minutes). Moreover, the maximum sight adaptation time may vary depending on the relative brightness levels to which the person is transitioning. Thus, the maximum sight adaptation time that is used in the processing system 108 may, at least in some embodiments, vary depending on the relative brightness levels. The maximum sight adaptation time(s) may be stored, for example, in a memory 124 that is implemented separate from, or as part of, the processing system 108

With the above in mind, the processing system 108 is further configured, based on the comparison of the computed ETA and the maximum sight adaptation time, to implement either the first brightness level adjustment process for adjusting the interior brightness level within the vehicle 110 or a second brightness level adjustment process for adjusting the interior brightness level within the vehicle 110. To this end, and as FIG. 1 further depicts, the processing system 108 is in operable communication with, and is configured to control, the one or more interior luminance sources 122 to thereby adjust the interior brightness level within the vehicle 110 according to the first or second brightness level adjustment process.

It will be appreciated that the one or more interior luminance sources 122 may be implemented using various types of devices. For example, the interior luminance source(s) 122 may be implemented using known vehicle interior lights, such as LEDs, incandescent, or halogen lights just to name a few. The interior luminance source(s) may also (or instead) be implemented using vehicle control panels and/or display devices. As is generally known, because displays have minimum and maximum usable brightness levels, the processing system may also be configured, at least in some embodiment, to adjust pixel saturation levels to help control overall ambient luminance levels.

The first brightness level adjustment process is implemented using a first sight adaptation time, and the second brightness level adjustment process is implemented using a second sight adaptation time that is less than the first sight adaptation time. The first sight adaptation time corresponds to a first time to gradually adjust the brightness level within the vehicle 110 to at least substantially match the exterior brightness level when the person exits vehicle 110 at the predetermined mission destination location, and the second sight adaptation time corresponds to a second time to adjust the brightness level within the vehicle to at least approach the exterior brightness level when the person exits vehicle at the predetermined mission destination location. It is noted that the phrase "at least approach the exterior brightness level" as used herein means that the brightness level may not, in some instances, be adjusted to substantially match (i.e., be within 5% of) the exterior brightness level.

More specifically, the processing system 108 is configured to implement the first brightness level adjustment process when the computed ETA at least substantially equals the maximum sight adaptation time, and to implement the second brightness level adjustment process when the computed ETA is less than the maximum sight adaptation time. This is because the first brightness level adjustment process will cause the brightness level within the vehicle 110 to be adjusted over a time period that at least substantially matches the maximum sight adaptation time, whereas the second brightness level adjustment process will cause the brightness level within the vehicle 110 to be adjusted over a time period that is less than the maximum sight adaptation time. It should be further noted that when the computed ETA exceeds the maximum sight adaptation time, the processing system 108 will not implement either the first brightness level adjustment process or second brightness level adjustment process. It is noted that the phrase "at least substantially match the maximum sight adaptation time" is used herein because this allows for a buffer to account for potential variations in the time of arrival.

It will be appreciated that the second brightness level adjustment process, because it is faster that than the first brightness level adjustment process, may not result in a person attaining full sight adaptation, but may attain the best possible result within the available time. The second brightness level adjustment process is implemented because, as noted above, the computed ETA is less than the maximum sight adaptation time. However, the second brightness level adjustment process is also implemented if an unexpected situation arises that requires immediate exit from the vehicle 110. To that effect, the processing system 100 is further configured to receive an immediate exit trigger signal and, upon receipt thereof, to implement the second brightness level adjustment process.

It will be appreciated that the source of the immediate exit trigger signal may vary. For example, the source 126 may be a switch disposed in a passenger compartment of the vehicle, a switch disposed in a driver compartment of a vehicle, or a switch mechanism connected to a door of the vehicle, just to name a few.

In some embodiments, the system 100 may additionally include one or more sensors for provide feedback to the processing system 108. These sensors may include one or more interior luminance sensors 128, which may be implemented using any one of numerous known luminance sensors, a camera, or array of sensors and/or cameras. In some embodiments, the system 100 may additionally (or instead) include one or more ocular sensors 132 (for clarity, only one shown). The ocular sensor(s) 132, when included is configured to sense at least the pupil size and eye activity of a person 130 (or persons) within the vehicle 110 and to supply ocular data indicative thereof to the processing system 108. The processing system 108 in such embodiments is further configured to process the ocular data to adjust, in real-time, the first sight adaptation process or the second sight adaptation process, as the case may be.

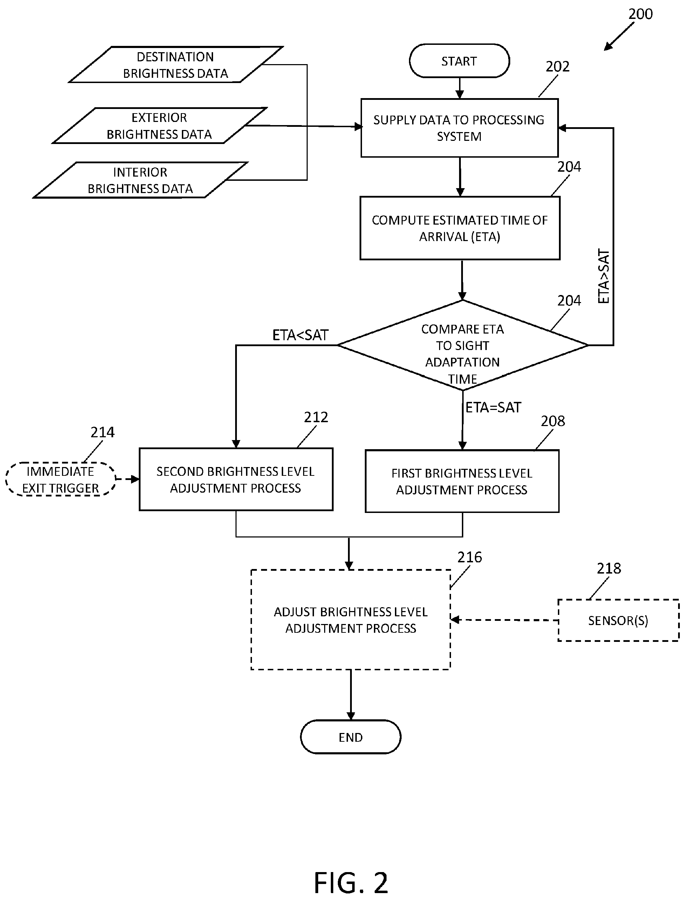

Referring now to FIG. 2, a process flowchart is depicted of one example process 200, implemented in the system 100, for adjusting brightness level within a vehicle 110. The order of operations within the process 200 is not limited to the sequential execution as illustrated in the figure, but may be performed in one or more varying orders as applicable and in accordance with the present invention.

The example process 200, which may be implemented within the processing system 108, includes supplying the destination brightness data, the exterior brightness data, and the interior brightness data to the processing system 108 (202) and processing these data in the processing system 108 to compute an estimated time of arrival (ETA) for the vehicle 110 to arrive at a predetermined mission destination location (204). The computed ETA is compared to a maximum sight adaptation time (206) and based on the comparison, either the first brightness level adjustment process, the second brightness level adjustment process, or neither adjustment level process is implemented.

That is, when the computed ETA exceeds the maximum sight adaptation time neither the first brightness level adjustment process nor the second brightness level adjustment process are implemented, and the process 200 repeats. When the computed ETA at least substantially equals the maximum sight adaptation time, the first brightness level adjustment process is implemented (208), and when the computed ETA is less than the maximum sight adaptation time, the second brightness level adjustment process is implemented (212).

As FIG. 2 also depicts, the process 200 will implement the second brightness level adjustment process (212) upon receipt of the immediate exit trigger signal (214). In addition, the process 200 may, in some embodiments, adjust the first or second sight adaptation process (216) based on the data received from the one or more feedback sensor(s) (218).

The system and method described herein automatically adjusts the brightness level within a vehicle to at least mitigate the potential performance decrease associated with the sight adaptation time.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

As used herein, the term "substantially" denotes within 5% to account for uncertainties. Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A sight adaptation system for a vehicle, comprising:
a mission data source (102) configured to supply destination brightness data that is indicative of a brightness level at a predetermined mission destination location;
an interior brightness level data source (106) configured to supply interior brightness data indicative of current interior brightness level within the vehicle; and
a processing system (108) coupled to receive at least the destination brightness data and the interior brightness data, the processing system configured to process at least the destination data and the interior brightness data to:
compute (204) an estimated time of arrival, ETA, for the vehicle to arrive at the predetermined mission destination location;
compare (206) the computed ETA to a maximum sight adaptation time; and
based on the comparison of the computed ETA and the maximum sight adaptation time, selectively implement a first brightness level adjustment process (208) for adjusting the interior brightness level within the vehicle or a second brightness level adjustment process (212) for adjusting the interior brightness level within the vehicle by varying a light output of one or more interior luminance sources (122), wherein the second brightness level adjustment process will cause the brightness level within the vehicle to be adjusted over a time period that is less than the maximum sight adaptation time, whereby
the processing system is configured to:
not implement either the first brightness level adjustment process or second brightness level adjustment process when the computed ETA exceeds the maximum sight adaptation time;
implement the first brightness level adjustment process when the computed ETA at least substantially equals the maximum sight adaptation time; and
implement the second brightness level adjustment process when the computed ETA is less than the maximum sight adaptation time, and
**characterized in that**
the processing system is further configured to receive an immediate exit trigger signal (214) indicative of an immediate exit of an occupant from the vehicle and, upon receipt thereof, to implement the second brightness level adjustment process (212).

2. The system of claim 1, wherein:
the first brightness level adjustment process (208) includes a first sight adaptation time, which corresponds to a first time to adjust the brightness level within the vehicle to at least substantially match the exterior brightness level at the predetermined mission destination location when the person exits vehicle at the predetermined mission destination location;
the second brightness level adjustment process (212) includes a second sight adaptation time, which corresponds to a second time to adjust the brightness level within the vehicle to at least approach the exterior brightness level when the person exits vehicle at the predetermined mission destination location; and
the first sight adaptation time is greater than the second sight adaptation time.

3. The system of claim 1, further comprising:
an ocular sensor (132) configured to sense at least pupil size and eye activity of the person within the vehicle and supply ocular data indicative thereof to the processing system,
wherein the processing system is further configured to process the ocular data to adjust, in real-time, the first sight adaptation process or the second sight adaptation process.

4. The system of claim 1, wherein the first brightness level adjustment process (208) will cause the brightness level within the vehicle to be adjusted over a time period that at least substantially matches the maximum sight adaptation time.

5. The system of claim 1, wherein:
the mission data source (102) comprises a remote illumination sensor disposed at the predetermined mission destination location; and
the destination brightness data is transmitted, in real-time, from the remote illumination sensor to the processing system.

6. The system of claim 1, further comprising:
a user interface in operable communication with the processing system and configured to receive user input,
wherein the destination brightness data is input manually via the user interface.

7. The system of claim 1, wherein the mission data source (102) is configured to generate the destination brightness data at least from data indicative of an estimated time of arrival for the vehicle to arrive at the predetermined mission destination location.

8. The system of claim 7, wherein the mission data source (102) is further configured to receive one or more of data indicative of time, date, solar and lunar cycles, forecast weather, air particulate levels such as dust or smog, whether the destination location is indoors or outdoors, primary direction, local terrain, foliage concentration and to generate the destination data based additionally on the data.

9. The system of claim 1, wherein the interior brightness level data source (106) comprises an interior luminance sensor configured to sense the current interior brightness level within the vehicle.

10. A method for adjusting brightness level within a vehicle, comprising the steps of:
supplying, to a processing system, destination brightness data and interior brightness data;
processing, at least the destination data and the interior brightness data, in the processing system to:
compute an estimated time of arrival, ETA, for the vehicle to arrive at a predetermined mission destination location;
compare the computed ETA to a maximum sight adaptation time; and
based on the comparison of the computed ETA and the maximum sight adaptation time, selectively implement a first brightness level adjustment process for adjusting the interior brightness level within the vehicle or a second brightness level adjustment process for adjusting the interior brightness level within the vehicle by varying a light output of one or more interior luminance sources,
wherein:
the destination brightness data is indicative of a brightness level at the predetermined mission destination location;
and
the interior brightness data is indicative of current interior brightness level within the vehicle, wherein:
the first brightness level adjustment process includes a first sight adaptation time, which corresponds to a first time to adjust the brightness level within the vehicle to at least substantially match the exterior brightness level when the person exits vehicle at the predetermined mission destination location;
the second brightness level adjustment process will cause the brightness level within the vehicle to be adjusted over a time period that is less than the maximum sight adaptation time , the method comprising:
not implementing either the first brightness level adjustment process or second brightness level adjustment process when the computed ETA exceeds the maximum sight adaptation time;
implementing the first brightness level adjustment process when the computed ETA at least substantially equals the maximum sight adaptation time; and
implementing the second brightness level adjustment process when the computed ETA is less than the maximum sight adaptation time,
wherein the method is **characterized in that** it comprises receiving an immediate exit trigger signal (214) indicative of an immediate exit of an occupant from the vehicle and, upon receipt thereof, implementing the second brightness level adjustment process (212).

## Patentansprüche

1. Sichtanpassungssystem für ein Fahrzeug, umfassend:
eine Missionsdatenquelle (102), die dazu konfiguriert ist, Zielhelligkeitsdaten zu liefern, die angebend für einen Helligkeitspegel an einem vorbestimmten Missionszielort sind;
eine Innenhelligkeitspegel-Datenquelle (106), die dazu konfiguriert ist, Innenhelligkeitsdaten zu liefern, die angebend für einen aktuellen Innenhelligkeitspegel innerhalb des Fahrzeugs sind; und
ein Verarbeitungssystem (108), das dazu gekoppelt ist, mindestens die Zielhelligkeitsdaten und die Innenhelligkeitsdaten zu empfangen, wobei das Verarbeitungssystem dazu konfiguriert ist, mindestens die Zieldaten und die Innenhelligkeitsdaten dazu zu verarbeiten:
eine geschätzte Ankunftszeit, ETA, für das Fahrzeug zu berechnen (204), um an dem vorbestimmten Missionszielort anzukommen;
die berechnete ETA mit einer maximalen Sichtanpassungszeit zu vergleichen (206); und
basierend auf dem Vergleich der berechneten ETA und der maximalen Sichtanpassungszeit, selektiv einen ersten Helligkeitspegelangleichungsprozess (208) zum Angleichen des Innenhelligkeitspegels innerhalb des Fahrzeugs oder einen zweiten Helligkeitspegelangleichungsprozess (212) zum Angleichen des Innenhelligkeitspegels innerhalb des Fahrzeugs durch Variieren einer Lichtausgabe einer oder mehrerer Innenluminanzquellen (122) zu implementieren, wobei der zweite Helligkeitspegelangleichungsprozess veranlasst, dass der Helligkeitspegel innerhalb des Fahrzeugs über einen Zeitraum angeglichen wird, der geringer ist als die maximale Sichtanpassungszeit,
wobei das Verarbeitungssystem dazu konfiguriert ist:
weder den ersten Helligkeitspegelangleichungsprozess noch den zweiten Helligkeitspegelangleichungsprozess zu implementieren, wenn die berechnete ETA die maximale Sichtanpassungszeit überschreitet;
den ersten Helligkeitspegelangleichungsprozess zu implementieren, wenn die berechnete ETA mindestens im Wesentlichen gleich der maximalen Sichtanpassungszeit ist; und
den zweiten Helligkeitspegelangleichungsprozess zu implementieren, wenn die berechnete ETA geringer als die maximale Sichtanpassungszeit ist; und
**dadurch gekennzeichnet, dass**
das Verarbeitungssystem ferner dazu konfiguriert ist, ein Sofortausstieg-Auslösesignal (214) zu empfangen, das angebend für einen Sofortausstieg eines Fahrgasts aus dem Fahrzeug ist, und bei Empfang desselben, den zweiten Helligkeitspegelangleichungsprozess (212) zu implementieren.

2. System nach Anspruch 1, wobei:
der erste Helligkeitspegelangleichungsprozess (208) eine erste Sichtanpassungszeit beinhaltet, die einer ersten Zeit zum Angleichen des Helligkeitspegels innerhalb des Fahrzeugs entspricht, um mindestens im Wesentlichen mit dem Außenhelligkeitspegel an dem vorbestimmten Missionszielort übereinzustimmen, wenn die Person an dem vorbestimmten Missionszielort aus dem Fahrzeug aussteigt;
der zweite Helligkeitspegelangleichungsprozess (212) eine zweite Sichtanpassungszeit beinhaltet, die einer zweiten Zeit zum Angleichen des Helligkeitspegels innerhalb des Fahrzeugs entspricht, um dem Außenhelligkeitspegel mindestens nahe zu kommen, wenn die Person an dem vorbestimmten Missionszielort aus dem Fahrzeug aussteigt; und
die erste Sichtanpassungszeit größer ist als die zweite Sichtanpassungszeit.

3. System nach Anspruch 1, ferner umfassend:
einen Okularsensor (132), der dazu konfiguriert ist, mindestens Pupillengröße und Augenaktivität der Person innerhalb des Fahrzeugs zu erfassen und Okulardaten, die angebend dafür sind, an das Verarbeitungssystem zu liefern,
wobei das Verarbeitungssystem ferner dazu konfiguriert ist, die Okulardaten zu verarbeiten, um den ersten Sichtanpassungsprozess oder den zweiten Sichtanpassungsprozess in Echtzeit anzugleichen.

4. System nach Anspruch 1, wobei der erste Helligkeitspegelangleichungsprozess (208) veranlasst, dass der Helligkeitspegel innerhalb des Fahrzeugs über einen Zeitraum angeglichen wird, der mindestens im Wesentlichen mit der maximalen Sichtanpassungszeit übereinstimmt.

5. System nach Anspruch 1, wobei:
die Missionsdatenquelle (102) einen entfernten Beleuchtungssensor umfasst, der an dem vorbestimmten Missionszielort angeordnet ist; und
die Zielhelligkeitsdaten in Echtzeit von dem entfernten Beleuchtungssensor an das Verarbeitungssystem übertragen werden.

6. System nach Anspruch 1, ferner umfassend:
eine Benutzerschnittstelle, die in betriebsfähiger Kommunikation mit dem Verarbeitungssystem und dazu konfiguriert ist, eine Benutzereingabe zu empfangen,
wobei die Zielhelligkeitsdaten manuell über die Benutzerschnittstelle eingegeben werden.

7. System nach Anspruch 1, wobei die Missionsdatenquelle (102) dazu konfiguriert ist, die Zielhelligkeitsdaten mindestens aus Daten zu erzeugen, die angebend für eine geschätzte Ankunftszeit für das Fahrzeug sind, um an dem vorbestimmten Missionszielort anzukommen.

8. System nach Anspruch 7, wobei die Missionsdatenquelle (102) ferner dazu konfiguriert ist, eines oder mehrere von Daten zu empfangen, die angebend sind für Zeit, Datum, Sonnen- und Mondzyklen, prognostiziertes Wetter, Luftpartikelpegel wie Staub oder Smog, ob der Zielort drinnen oder draußen liegt, eine primäre Richtung, ein lokales Gelände, Laubkonzentration und um die Zieldaten zusätzlich basierend auf den Daten zu erzeugen.

9. System nach Anspruch 1, wobei die Innenhelligkeitspegel-Datenquelle (106) einen Innenluminanzsensor umfasst, der dazu konfiguriert ist, den aktuellen Innenhelligkeitspegel innerhalb des Fahrzeugs zu erfassen.

10. Verfahren zum Angleichen eines Helligkeitspegels innerhalb eines Fahrzeugs, die folgenden Schritte umfassend:
Liefern, an ein Verarbeitungssystem, von Zielhelligkeitsdaten und Innenhelligkeitsdaten;
Verarbeiten mindestens der Zieldaten und der Innenhelligkeitsdaten in dem Verarbeitungssystem dazu:
eine geschätzte Ankunftszeit, ETA, für das Fahrzeug zu berechnen, um an einem vorbestimmten Missionszielort anzukommen;
die berechnete ETA mit einer maximalen Sichtanpassungszeit zu vergleichen; und
basierend auf dem Vergleich der berechneten ETA und der maximalen Sichtanpassungszeit, selektiv einen ersten Helligkeitspegelangleichungsprozess zum Angleichen des Innenhelligkeitspegels innerhalb des Fahrzeugs oder einen zweiten Helligkeitspegelangleichungsprozess zum Angleichen des Innenhelligkeitspegels innerhalb des Fahrzeugs durch Variieren einer Lichtausgabe einer oder mehrerer Innenluminanzquellen zu implementieren,
wobei:
die Zielhelligkeitsdaten angebend für einen Helligkeitspegel an dem vorbestimmten Missionszielort sind;
und
die Innenhelligkeitsdaten angebend für einen aktuellen Innenhelligkeitspegel innerhalb des Fahrzeugs sind, wobei:
der erste Helligkeitspegelangleichungsprozess eine erste Sichtanpassungszeit beinhaltet, die einer ersten Zeit zum Angleichen des Helligkeitspegels innerhalb des Fahrzeugs entspricht, um mindestens im Wesentlichen mit dem Außenhelligkeitspegel übereinzustimmen, wenn die Person an dem vorbestimmten Missionszielort aus dem Fahrzeug aussteigt;
der zweite Helligkeitspegelangleichungsprozess veranlasst, dass der Helligkeitspegel innerhalb des Fahrzeugs über einen Zeitraum angeglichen wird, der geringer als die maximale Sichtanpassungszeit ist, das Verfahren umfassend:
Implementieren weder des ersten Helligkeitspegelangleichungsprozesses noch des zweiten Helligkeitspegelangleichungsprozesses, wenn die berechnete ETA die maximale Sichtanpassungszeit überschreitet;
Implementieren des ersten Helligkeitspegelangleichungsprozesses, wenn die berechnete ETA mindestens im Wesentlichen gleich der maximalen Sichtanpassungszeit ist; und
Implementieren des zweiten Helligkeitspegelangleichungsprozesses, wenn die berechnete ETA geringer als die maximale Sichtanpassungszeit ist,
wobei das Verfahren **dadurch gekennzeichnet ist, dass** es das Empfangen eines Sofortausstieg-Auslösesignals (214), das angebend für einen Sofortausstieg eines Fahrgasts aus dem Fahrzeug ist, und bei Empfang desselben, das Implementieren des zweiten Helligkeitspegelangleichungsprozesses (212) umfasst.

## Revendications

1. Système d'adaptation de vision pour un véhicule, comprenant :
une source de données de mission (102) configurée pour fournir des données de luminosité de destination qui sont indicatives d'un niveau de luminosité à un emplacement de destination de mission prédéterminé ;
une source de données de niveau de luminosité intérieure (106) configurée pour fournir des données de luminosité intérieure indicatives d'un niveau de luminosité intérieure actuel dans le véhicule ; et
un système de traitement (108) couplé pour recevoir au moins les données de luminosité de destination et les données de luminosité intérieure, le système de traitement configuré pour traiter au moins les données de destination et les données de luminosité intérieure pour :
calculer (204) une heure d'arrivée prévue, ETA, pour que le véhicule arrive à l'emplacement de destination de mission prédéterminé ;
comparer (206) l'ETA calculée à un temps d'adaptation de vision maximal ; et
sur la base de la comparaison de l'ETA calculée et du temps d'adaptation de vision maximal, mettre en œuvre de manière sélective un premier processus d'ajustement de niveau de luminosité (208) pour ajuster le niveau de luminosité intérieure dans le véhicule ou un deuxième processus d'ajustement de niveau de luminosité (212) pour ajuster le niveau de luminosité intérieure dans le véhicule en faisant varier une sortie de lumière d'une ou plusieurs sources lumineuses intérieures (122), dans lequel le deuxième processus d'ajustement de niveau de luminosité amènera le niveau de luminosité dans le véhicule à être ajusté au cours d'une période de temps qui est inférieure au temps d'adaptation de vision maximal,
dans lequel le système de traitement est configuré pour :
ne pas mettre en œuvre soit le premier processus d'ajustement de niveau de luminosité soit le deuxième processus d'ajustement de niveau de luminosité lorsque l'ETA calculée dépasse le temps d'adaptation de vision maximal ;
mettre en œuvre le premier processus d'ajustement de niveau de luminosité lorsque l'ETA calculée est au moins sensiblement égale au temps d'adaptation de vision maximal ; et
mettre en œuvre le deuxième processus d'ajustement de niveau de luminosité lorsque l'ETA calculée est inférieure au temps d'adaptation de vision maximal, et
**caractérisé en ce que**
le système de traitement est en outre configuré pour recevoir un signal de déclenchement de sortie immédiate (214) indicatif d'une sortie immédiate d'un occupant du véhicule et, lors de la réception de celui-ci, pour mettre en œuvre le deuxième processus d'ajustement de niveau de luminosité (212).

2. Système selon la revendication 1, dans lequel :
le premier processus d'ajustement de niveau de luminosité (208) inclut un premier temps d'adaptation de vision, qui correspond à un premier temps pour ajuster le niveau de luminosité dans le véhicule pour au moins sensiblement correspondre au niveau de luminosité extérieure à l'emplacement de destination de mission prédéterminé lorsque la personne sort du véhicule à l'emplacement de destination de mission prédéterminé ;
le deuxième processus d'ajustement de niveau de luminosité (212) inclut un deuxième temps d'adaptation de vision, qui correspond à un deuxième temps pour ajuster le niveau de luminosité dans le véhicule pour au moins se rapprocher du niveau de luminosité extérieure lorsque la personne sort du véhicule à l'emplacement de destination de mission prédéterminé ; et
le premier temps d'adaptation de vision est plus grand que le deuxième temps d'adaptation de vision.

3. Système selon la revendication 1, comprenant en outre :
un capteur oculaire (132) configuré pour capter au moins une taille de pupille et une activité d'œil de la personne dans le véhicule et pour fournir des données oculaires indicatives de celles-ci au système de traitement,
dans lequel le système de traitement est en outre configuré pour traiter les données oculaires pour ajuster, en temps réel, le premier processus d'adaptation de vision ou le deuxième processus d'adaptation de vision.

4. Système selon la revendication 1, dans lequel le premier processus d'ajustement de niveau de luminosité (208) amènera le niveau de luminosité dans le véhicule à être ajusté au cours d'une période de temps qui correspond au moins sensiblement au temps d'adaptation de vision maximal.

5. Système selon la revendication 1, dans lequel :
la source de données de mission (102) comprend un capteur d'éclairement à distance disposé à l'emplacement de destination de mission prédéterminé ; et
les données de luminosité de destination sont transmises, en temps réel, à partir du capteur d'éclairement à distance au système de traitement.

6. Système selon la revendication 1, comprenant en outre :
une interface utilisateur en communication opérationnelle avec le système de traitement et configurée pour recevoir des entrées utilisateur,
dans lequel les données de luminosité de destination sont entrées manuellement par l'intermédiaire de l'interface utilisateur.

7. Système selon la revendication 1, dans lequel la source de données de mission (102) est configurée pour générer les données de luminosité de destination au moins à partir de données indicatives d'une heure d'arrivée prévue pour que le véhicule arrive à l'emplacement de destination de mission prédéterminé.

8. Système selon la revendication 7, dans lequel la source de données de mission (102) est en outre configurée pour recevoir une ou plusieurs données indicatives de l'heure, de la date, de cycles solaire et lunaire, de prévisions météorologiques, de niveaux de particules d'air telles que de la poussière ou du brouillard, que l'emplacement de destination soit à l'intérieur ou à l'extérieur, de direction primaire, de terrain local, de concentration de feuillage et pour générer les données de destination sur la base supplémentaire des données.

9. Système selon la revendication 1, dans lequel la source de données de niveau de luminosité intérieure (106) comprend un capteur d'éclairement intérieur configuré pour capter le niveau de luminosité intérieure actuel dans le véhicule.

10. Procédé pour ajuster un niveau de luminosité dans un véhicule, comprenant les étapes suivantes :
la fourniture, à un système de traitement, de données de luminosité de destination et de données de luminosité intérieure ;
le traitement, au moins des données de destination et des données de luminosité intérieure, dans le système de traitement pour :
calculer une heure d'arrivée prévue, ETA, pour que le véhicule arrive à un emplacement de destination de mission prédéterminé ;
comparer l'ETA calculée à un temps d'adaptation de vision maximal ; et
sur la base de la comparaison de l'ETA calculée et du temps d'adaptation de vision maximal, mettre en œuvre de manière sélective un premier processus d'ajustement de niveau de luminosité pour ajuster le niveau de luminosité intérieure dans le véhicule ou un deuxième processus d'ajustement de niveau de luminosité pour ajuster le niveau de luminosité intérieure dans le véhicule en faisant varier une sortie de lumière d'une ou plusieurs sources lumineuses intérieures,
dans lequel :
les données de luminosité de destination sont indicatives d'un niveau de luminosité à l'emplacement de destination de mission prédéterminé ;
et
les données de luminosité intérieure sont indicatives d'un niveau de luminosité intérieure actuel dans le véhicule, dans lequel :
le premier processus d'ajustement de niveau de luminosité inclut un premier temps d'adaptation de vision, qui correspond à un premier temps pour ajuster le niveau de luminosité dans le véhicule pour au moins sensiblement correspondre au niveau de luminosité extérieure lorsque la personne sort du véhicule à l'emplacement de destination de mission prédéterminé ;
le deuxième processus d'ajustement de niveau de luminosité amènera le niveau de luminosité dans le véhicule à être ajusté au cours d'une période de temps qui est inférieure au temps d'adaptation de vision maximal, le procédé comprenant :
la non-mise en œuvre soit du premier processus d'ajustement de niveau de luminosité soit du deuxième processus d'ajustement de niveau de luminosité lorsque l'ETA calculée dépasse le temps d'adaptation de vision maximal ;
la mise en œuvre du premier processus d'ajustement de niveau de luminosité lorsque l'ETA calculée est au moins sensiblement égale au temps d'adaptation de vision maximal ; et
la mise en œuvre du deuxième processus d'ajustement de niveau de luminosité lorsque l'ETA calculée est inférieure au temps d'adaptation de vision maximal,
dans lequel le procédé est **caractérisé en ce qu'**il comprend la réception d'un signal de déclenchement de sortie immédiate (214) indicatif d'une sortie immédiate d'un occupant du véhicule et, lors de la réception de celui-ci, la mise en œuvre du deuxième processus d'ajustement de niveau de luminosité (212).
